# EUROPEAN PATENT APPLICATION

(11) **EP 4 794 153 A1**
(43) Date of publication of application: **19.08.2026**
(21) Application number: 25157697.1
(22) Date of filing: 13.02.2025
(51) Int. Cl.: H02J 1/10, H02J 3/06, H02J 3/36

(54) **METHOD OF CONTROLLING A MULTITERMINAL DC POWER NETWORK**

(71) Applicant: Hitachi Energy Ltd, 8050 Zürich (CH)
(72) Inventor: Giuntoli, Marco, 64521 Groß-Gerau (DE); Peter, Lena, 67063 Ludwigshafen am Rhein (DE); Katiyar, Neeraj, Montreal H3A 0A9 (CA); Dejene, Firew Zerihun, 177 56 Stockholm (SE)
(74) Representative: AWA Sweden AB

(57) **Abstract**

There is disclosed herein a system and method for determining updated references converters in a multiterminal DC, MTDC, power network. The method comprises obtaining (410) information for a plurality of converter stations in the MTDC power network, providing (420) the information as input to an optimization problem, and solving (430) the optimization problem numerically to thereby obtain the updated references. The solution ensures the dispatching of power and voltage profiles across the system, minimizing deviations from pre-contingency operations and ensuring compliance with all network constraints.

## Description

### Technical Field

The present disclosure relates to a control method for power networks. More particularly, the present disclosure relates to a method for determining a control setpoint for a multi-terminal DC (MTDC) power network.

### Background

MTDC power networks (or 'grids') are becoming increasingly common. An MTDC grid connects multiple points using direct current (DC) transmission lines. The main benefit of MTDC grids is their ability to efficiently integrate and distribute renewable energy sources over long distances, enhancing grid stability and reducing transmission losses.

The optimal control of MTDC grids inherits opportunities and challenges from AC optimal power flow (AC-OPF) methods.

Typically, when modelling AC-OPF in transmission grids, a model is built based on substantial simplifications, such as where three phase systems are considered symmetrical and operate in a balanced regime and any type of contingencies (e.g., failures or faults) are considered symmetric.

While for AC grids, active power is driven by voltage phase and magnitude differences between two adjacent buses, power flow in DC grids is only driven by voltage magnitude differences and phase deviations lose their meaning. Nevertheless, DC grids may be subjected to different system constraints like limits on the operating DC voltage ranges and current capabilities for AC/DC stations and DC cables.

It is desirable to derive an optimal power flow control methodology that is applicable to an MTDC grid to ensure safe and stable operation.

### Summary

Aspects of the present disclosure are therefore directed at providing such an OPF control method. According to aspects of the present disclosure, the output of such a control method comprises at least one setpoint for one or more converters in the MTDC grid. The control method is preferably configured to operate in real-time, or at least responsive to contingency conditions (e.g., faults or failures).

It is realized as part of the present disclosure that, for an optimal MTDC control scheme, the converter and grid contingencies should be modelled with minimal grid simplification. For example, most MTDC grids are deployed with a bipolar pole to neutral voltage scheme (bipolar), i.e., an AC/DC station is composed by two converters connected in series between a positive, negative poles and a neutral (which could also have a metallic return conductor). In such a case, a contingency profoundly modifies any balanced working condition. Moreover, in case of contingencies that could lead to outages in lines or a converter pole, the pre-contingency power and voltage converter references may not be valid anymore, and they could also lead to control setpoints that are not applicable due to a violation of voltage or current capabilities.

Hence, aspects of the present disclosure are further directed at providing a control methodology that is capable of finding an optimal/feasible control setpoint that considers the MTDC topology, including any network and/or converter constraints.

According to aspects of the present disclosure, an optimal condition can be considered as a minimum deviation from former references and/or a minimum deviation of measured values from references. In general, aspects of the present disclosure can also be used to define power and voltage profiles for grid converters with or without contingencies. The methodology is applicable for both balanced and unbalanced bi-polar and mono-polar cases.

In particular, according to an aspect of the present disclosure, there is provided a computer-implemented method for determining updated references for at least one converter in a multiterminal DC, MTDC, power network.

The method comprises obtaining information for a plurality of converter stations in the MTDC power network, wherein the information comprises, for each converter station:
- a previous reference for the power of a converter in the converter station,
- a measured value for the power of the converter,
- a previous reference for the voltage of the converter,
- a measured value for the voltage of the converter,
- a converter rating for the converter, and
- a line rating for lines connected to the converter station.

It will be appreciated that the converter station may comprise one or more converters. In an example, the converter station is a bipolar converter station having a positive pole and a negative pole, each of the positive pole and negative pole having at least one line connected thereto, and wherein the control setpoint is used for both the positive and negative poles. The positive and the negative pole can be considered as different parts of the same converter. However, if the converter station comprises more than one converter, the presently disclosed method may be performed for all, one, or some of the converters in the converter station.

The measured and reference values for the power for the converter may be adopted for the AC power and/or the DC power side of the converter. For example, all power measurements and references may be obtained/determined for the same power side, e.g., the DC power side. However, if a combination of power sides is used (e.g., for the same converter or for different converters), then the converter losses may be measured or estimated such that an AC-equivalent power can be derived from a DC-power value, and/or vice versa.

The method further comprises providing the information as input to an optimization problem, wherein the optimization problem is configured to minimize a difference between the updated references and the previous references and/or the measured values, with at least the converter rating and the line ratings as constraints.

The optimization problem may generally have the form of: ${min}_{x} f \left(x\right)$ $s . t . g \left(x\right) = 0$ $h \left(x\right) \geq 0$

Where f: ${ℝ}^{{n}_{x}} \to ℝ$ is a generic objective function to be minimized for the *nₓ*-dimensional decision variable *x ; h(x)* is the generic set of equality constraints mapping from ${ℝ}^{{n}_{x}} \to {ℝ}^{{n}_{e}}$ with *nₑ* number of equality constraints; *g(x)* is a generic set of inequality constraints mapping from ${ℝ}^{{n}_{x}} \to {ℝ}^{{n}_{i}}$ with *nᵢ* number of equality constraints. In this formulation all the functions are assumed twice differentiable, and all the variables are continuous in their domain.

The goal of the optimization may be two-fold, as mentioned above. That is, one objective may be to minimize a difference between the updated references and the previous references. The previous references may have been defined by a previous iteration of the presently disclosed method, or another method, or they may have been defined by a power grid operator. It is typically desired to maximize a power flow through the MTDC grid, and therefore the previous references are typically those set for such maximal power flow. Therefore, by minimizing a difference between the updated references and the previous references, then a maximal power flow can be preserved, albeit possibly less power flow than before due to, e.g., a fault, failure, or other contingency event that may have triggered the updating of the references.

Another objective may be to minimize a difference between the updated references and the measured values. In some circumstances, the effect of minimizing the difference between the updated references and the measured values may be the same as minimizing the difference between the updated references and the previous references. That is, the measured values may correspond substantially exactly to the previous references. However, in real-life scenarios, there may be a slight or substantial deviation of the measured values from the previous references, due to calibration errors, modelling inaccuracies, sensor issues, or other effects. Therefore, by also factoring in a difference between the updated references and the measured values, the optimization procedure can adapt to real-life scenarios and detect any inaccuracies that may need to be accounted for.

Thus, generally, it can be seen that the aim of the optimization problem is to minimize the distance between the voltages and powers with respect to their references (and/or measurements) while maintaining a feasible solution, i.e., a power flow solution without any violations of grid requirements or physical constraints.

In a preferred example, the optimization problem is configured to minimize a difference between the updated reference and the previous reference and/or the measured value for the power of the converter, according to a first weighting, and wherein the optimization problem is configured to minimize a difference between the updated reference and the previous reference and/or the measured value for the voltage of the converter, according to a second weighting, said second weighting being adjustable relative to the first weighting. Put another way, updated voltage and power references for the converter may be an output of the optimization problem, and the changes in power vs. voltage may be controlled differently.

It is realized as a part of the present disclosure that, if only power references are updated when controlling the MTDC grid, then there is a risk of damaging voltage transients propagating through the grid. Therefore, by controlling an updated voltage reference in addition to an updated power reference, limits, controls, and the like may be placed on the updated voltage reference to ensure minimal disturbance from voltage transients. However, it is further realized as part of the present disclosure that a maximal power flow may be prioritized at some or all times during control of the MTDC grid. Therefore, a weighting can be adjusted between the deviation in the updated voltage reference, and the deviation in the updated power reference, thereby provided greater control flexibility for substantially all real-world control scenarios.

For example, the optimization problem may be configurable to adopt any one of:
- a voltage following control mode, wherein deviation from a voltage reference (and/or measurement) is penalized,
- a power following control mode, wherein deviation from a power reference (and/or measurement) is penalized, and
- a droop control mode, wherein deviation from a linear relationship between voltage and power references (and/or measurements) is penalized; via adjustment of the first weighting relative to the second weighting.

Additionally or alternatively, in a preferred example, the optimization problem is configured to minimize a difference between the updated references and the previous references according to a third weighting, and configured to minimize a difference between the updated references and the measured values according to a fourth weighting, said fourth weighting being adjustable relative to the third weighting. Put another way, the deviation penalties for a deviation of an updated reference from a previous reference vs. a measured value may be controlled differently.

As mentioned above, by also factoring in a difference between the updated references and the measured values, the optimization procedure can adapt to real-life scenarios and detect any inaccuracies that may need to be accounted for. However, if it is determined or assumed that the inaccuracies are higher or lower, then the relative weight placed on the deviations from measured values can be adjusted accordingly. In this way, greater control flexibility is provided. It will be appreciated that any of the first, second, third, or fourth weightings may be zero. For example, if the fourth weighting is zero and the third weighting is one (assuming that all weightings are scaled from zero to one), then the control method may only consider deviations from previous references in its determination of updated references. This may be a preferred operation in cases where there is a sensor malfunction, or a low risk of modelling inaccuracies, for example.

Those skilled in the art will appreciate any combination of weighting can have associated benefits depending on the implementation. However, in any event, the possibility to adjust these weightings (preferably dynamically in real time) adds substantial flexibility to the control method so that the control method can dynamically respond to varying real-world scenarios, all while achieving a feasible solution.

With the optimization constructed as mentioned above, the method further comprises solving the optimization problem numerically to thereby obtain the updated references. It will be understood that the update reference(s) may then be communicated to one or more respective converters so that the converter(s) can change their operations accordingly. With the converter operation so changed, according to the updated reference(s), with these updated references being based on determined and/or measured properties of the real power network in which the converter is implemented, the power network may operate more reliably. For example, because the optimization problem is configured to minimize the distance between the voltages and powers with respect to their references (and/or measurements) while maintaining a feasible solution, the power flow through the network may be maximized, the voltage disturbances may be minimized, and/or impossible proposed operation controls may be avoided.

According to aspects of the present disclosure, a solution (i.e., knowing voltage and power profiles over all the DC sources) is obtained using numerical methods like Newton-Raphson due to the non-linearity of the power balance equation.

In an example implementation, solving the optimization problem numerically comprises using an interior point method. However, the presently disclosed method is not necessarily limited to such an option. Indeed, the presented methodology is flexible to different iterative solvers that minimize or maximize a function f with voltage and power balance constraints.

Thus, generally, it is seen from the above discussion that aspects of the present disclosure can define operational points for converters in an MTDC grid in real-time within the limits of the DC system with the minimum deviation from the operator set references and corrective actions based on field measurements.

The information obtained and input into the optimization problem may be expanded to more comprehensively represent a real-world power network, and to improve the ability of the control method to output a truly feasible solution.

For example, in preferred examples, the information further comprises, for each converter station, a measured value for the converter pole voltage and/or the converter pole power. That is, the measured value for the voltage and power of the converter may be a pole voltage and power for the converter (e.g., if the converter is part of a bipolar converter station with a positive and negative pole).

The information may further comprise a voltage rating, a current rating, and/or a power rating for the converter. Preferably all of the voltage, current, and power ratings for the converter may be taken into account to ensure a feasible solution is output by the present disclosed control method.

Additionally, the line rating may comprise a current rating, a power rating, and/or a voltage rating for lines connected to the converter station. Preferably, each line of the MTDC power network is included in the obtained information. Furthermore, the information preferably comprises, for each line connected to the converter station, an identifier for the line, information regarding the converter station(s) the line is connected to, a resistance of the line, a length of the line, and/or an ampacity of the line (where the ampacity may also be seen as a type of line rating).

The information may also include a flag that indicates a connectivity or fault status for the line. For example, the flag may indicate, either for the entire line or for the connection at either end, a True/False status, where True indicates that the line is connected and/or healthy, and False indicates that the line (or a connection point) is disconnected and/or experiencing a failure. This information may be taken into account by the optimization method so that no power is transmitted over lines with a False status flag. A similar flag may be provided for the energization station of a converter, a pole of a converter, and/or an entire converter station, depending on the implementation.

The converter station may further comprise a neutral having at least one dedicated metallic return, DMR, line connected thereto. It will be appreciated that multiple DMR lines may be connected to the neutral if the neutral comprises a neutral bus, e.g., for connecting to multiple other converter stations or passive buses in the MTDC power network. In a case where the converter station comprises a neutral, the information may further comprise a grounding resistance for the neutral.

The information may further comprise a determined power loss for the converter. The power loss for the converter may be calculated as fixed losses of the positive and negative pole with respect to the nominal power capability of the pole, e.g., if the converter station is formed as a bipolar converter station with a positive and negative pole. Put another way, the power loss for the positive pole and the negative pole may be determined as a fixed proportion of the respective nominal power capability. Alternatively, the power loss may be estimated, measured, modelled, or otherwise determined, and may be adjusted over time to better reflect the reality of the system.

The presented control method above refers to 'a converter' in the MTDC power network, and may be applied to the control of one converter. However, a most preferred example comprises a collection of information from, and generation of updated references for, substantially all of the converters in the network, or at least as many converters as possible that may be under the control of the same overall controller.

That is, obtaining information for the plurality of converter stations in the MTDC power network may comprise obtaining information for each converter station in the MTDC network, and wherein a respective control setpoint is determined for said each converter station in the MTDC network.

Although converter stations are referred to as the main nodes of the power network, it will be appreciated that secondary nodes in the grid may comprise passive busses or the like, where lines are joined without converters.

The updating of references may occur regularly, e.g., at fixed or dynamic intervals. Additionally or alternatively, the updating of references may be triggered by a contingency event, where a contingency comprises a fault, failure, insertion, removal, or other modification of the state of the MTDC power network, or the requirements placed thereon.

It is realized as a part of the present disclosure that, even if a contingency event occurs in one part of a grid remote from another part, said other part of the grid may also need to be considered in the generating of updated references. This is due to the substantially non-linear nature of a real-world MTDC grid. Thus, in preferred examples, it is not only converter stations in the proximity of the contingency event that are factored into the control method, but substantially all converter stations under the control of the controller executing the control method.

Additionally or alternatively, in a most preferred example, the information obtained is substantially real-time information. That is, the MTDC grid may be monitored constantly, which measured information from lines and converter stations coming in as a datastream at some frequency. In this way, the updated references can be based on the most up-to-date snapshot of the reality of the grid, thereby producing an improved updated reference. Furthermore, if the update to the references is triggered by a contingency event, then this contingency can be detected, e.g., via the obtained information or otherwise, and responded to as quickly as possible.

It is also realized as a part of the present disclosure that the interior point method for numerically solving the optimization problem provides a particularly fast and robust approach for responding to power network contingencies.

Hence, aspects of the present disclosure can ensure the rapid dispatching of power and voltage profiles across the system, minimizing deviations from pre-contingency operations and ensuring compliance with all network constraints.

The control method as described above may preferably be deployed in a grid-level controller. The method is computer-implemented and as such may be carried out by a data processing system comprising means for doing so. It will be appreciated that any such data processing system may be localized in any suitable infrastructure, including in any one of the converter stations, or the data processing system may be cloud-based and/or distributed geographically, e.g., for redundancy or robustness.

Thus, according to a further aspect of the present disclosure, there is provided a computer program comprising instructions which, when the program is executed by a computer, cause the computer to carry out the control method as described above. According to yet a further aspect of the present disclosure, there is provided a computer-readable medium comprising instructions which, when executed by a computer, cause the computer to carry out the control method as described above.

Although some advantages have been explicitly laid out above, those skilled in the art will immediately recognize, from the disclosure herein, further possible advantages provided by aspects of the present disclosure. Additionally, advantages provided by the control method as such will inevitably precipitate into advantageous aspects of any data processing system executing such a method, or any power grid being controlled according to such a method. Further advantages may become apparent through the consideration of specific examples, such as those laid out below.

### Brief Description of the Drawings

One or more example implementations of the present disclosure will be described below, with reference to the following drawings (or 'figures'), in which:
Figure 1 schematically shows a power system comprising an AC power network and a DC power network;
Figures 2A and 2B schematically show an example point-to-point DC grid connection;
Figures 3A and 3B schematically show an example DC grid loop having four converter stations;
Figure 4 illustrates a method for determining a control setpoint for a converter in an MTDC power network, according to aspects of the present disclosure; and
Figure 5 schematically shows a system configured to perform a method for determining a control setpoint for a converter in an MTDC power network.

### Detailed Description

The present disclosure is described in the following by way of a number of illustrative examples. It will be appreciated that these examples are provided for illustration and explanation only and are not intended to be limiting on the scope of the present disclosure. Instead, the scope of the present disclosure is defined by the appended claims.

Furthermore, although embodiments be presented individually for the sake of focused discussion of particular features, it will be recognized that the present disclosure also encompasses combinations of the embodiments described herein.

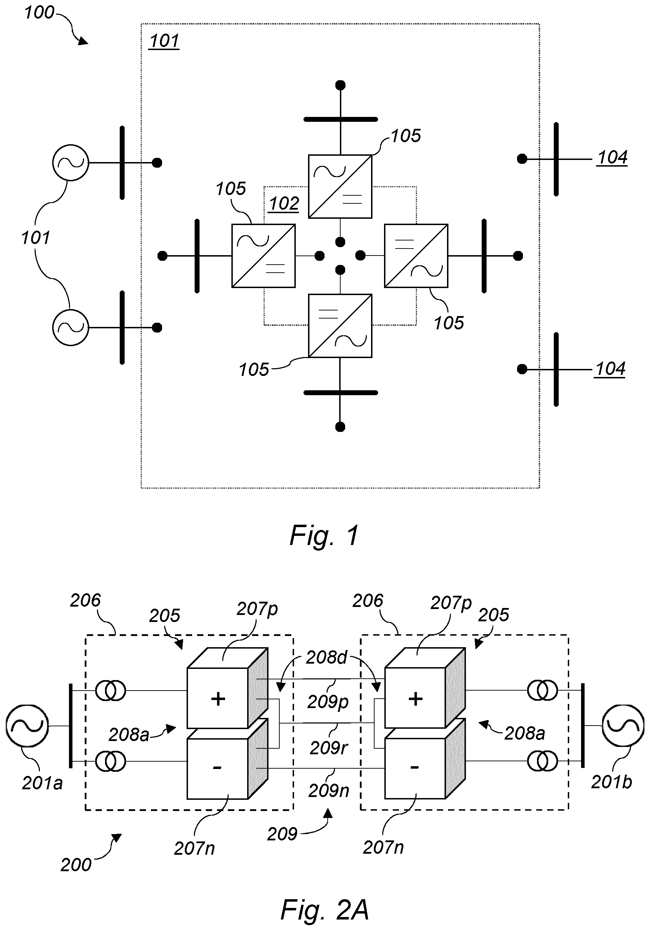

Figure 1 schematically shows a power system 100 comprising an AC power network 101 and a DC power network 102. The power system 100 comprises power generation sources 103 which generate power for use by loads 104. Power generation sources 103 may generate or otherwise output AC power. An example of a power generation source 103 is a wind farm. Loads 104 typically require receiving AC power to properly function. An example of a load 104 is an industrial area which uses power for industry.

Therefore, the power generation sources 103 and the loads 104 are coupled to the AC power network 101, in a manner understood by those skilled in the art but the full details of which are outside the scope of the present disclosure. That is, the power generation sources 103 provide power into the AC grid 101 and the loads 104 draw power from the AC grid 101. However, the power generation sources 103 and the loads 104 may be separated by a substantial distance, for example hundreds or even thousands of kilometers. Therefore, the electrical power may need to be transmitted over great distances.

If the power is transmitted over great distances in the form of AC power, then the losses may be substantial, due to, for example, the resistance and reactance of transmission lines. Therefore, in recent years, it has been explored to implement high voltage DC (HVDC) links into power networks - this is the nature of the illustrated DC power network 102. That is, the DC power network 102 acts to transmit power between distance portions of the AC power network 101. The losses from such power transmission in the DC power network 102 are substantially lower than they would be using long-distance AC power transmission.

Interconnecting the AC power network 101 and the DC power network 102 are a plurality of converters 105. Each converter 105 comprises an AC power side, connected to the AC power network 101, and a DC power side, connected to the DC power network. In this example, the converters 105 are preferably voltage source converters (VSCs), and further preferably implemented as multilevel modular converters (MMCs).

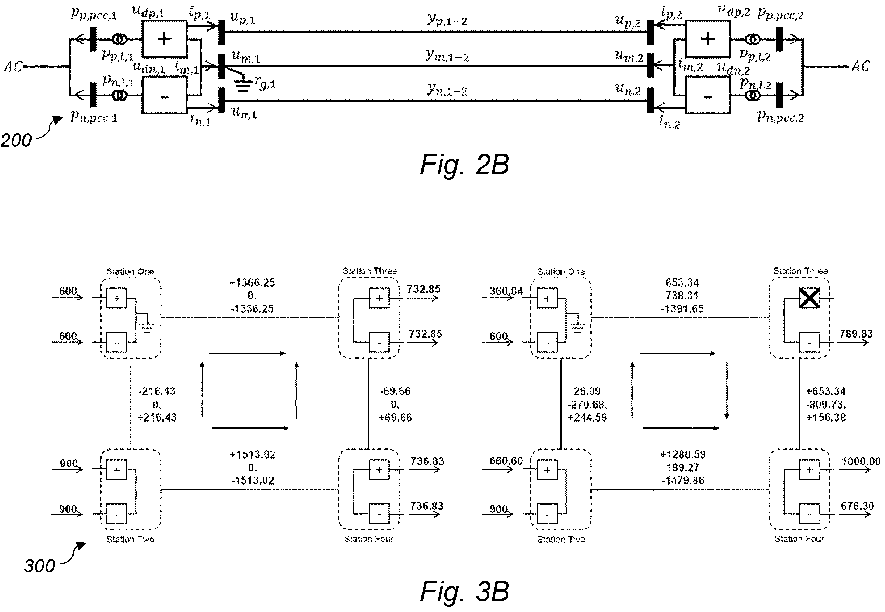

Figure 2 schematically shows an example multiterminal DC (MTDC) network 200, which may form part of the DC power network 102 shown in figure 1. The illustrated MTDC network 200 is a point-to-point HVDC link 200.

The MTDC network 200 comprises a pair of converter stations 206, where each converter station 206 is a bipolar converter station. That is, each converter stations 206 comprises a converter 205 having a positive pole 207p and a negative pole 207n, collectively referenced as 'poles 207'. Each pole may be formed as a different converter or the positive and negative poles 207p, 207n may each be a portion of the same converter 205, depending on the implementation.

The converters 205 have an AC power side 208a and a DC power side 208d. Thus, there is a positive AC pole and a negative AC pole on the AC power side, and a positive DC pole and a negative DC pole on the DC power side.

The AC power sides 208a of the converters 205 are coupled via an AC power bus to respective portions 201a and 201b of an AC power network (not shown in detail). In this illustrated example, the coupling to the portions 201a and 201b of the AC power network is via respective power transformers. This coupling, the nature, and particular construction of the power transformers will be understood by those skilled in the art, but the full details are outside the scope of the present disclosure.

Hence, the MTDC power network 200 shown in figure 2 may facilitate the efficient transmission of power between different parts of a power network, which may be over a substantial distance.

The converter stations are interconnected by a plurality of transmission lines 209p, 209r, and 209n, collectively referred to as 'transmission lines 209' or simply 'lines 209'. These lines 209 may comprise underground, undersea, and/or overhead cables. The line 209p may be referred to as a positive pole line 209p, and interconnects the positive poles 207p of the converter stations 206. The line 209n may be referred to as a negative pole line 209n, and interconnects the negative poles 207n of the converter stations 206. The line 209r may be referred to as a return line 209r, or a dedicated metallic return (DMR) line, or a neutral line. The DMR line 209r is used to provide a dedicated metallic return path for the current in a DC power network. An alternative to the DMR line 209r is a grounded return, where the return current flows through the earth. As an alternative to the term 'line', the term 'branch' may be used.

An optimized control of the DC power network such as that shown in figure 2A is the subject of the present disclosure. It is appreciated as part of the present disclosure that, for the control method to be generalizable to substantially any topology with undefined numbers of converter stations and lines/branches, converter stations and lines should be defined in a manner that is suitably abstract for versatility, but not so abstract as to be detached from reality and lacking practical utility. Hence, the presently disclosed control method aims to provide this.

More specifically, the presently disclosed control method comprises the definition of an optimization problem, which is provided with input information, and variables that can be adjusted, so as to arrive at one or more output control setpoints. The control setpoints may comprise the voltage setpoint for the positive and/or negative poles of the converter station, and/or the power setpoint for the position and/or negative poles (on the AC and/or DC power side) of the converter station.

According to an example implementation of the presently disclosed control method, a station such as those shown in figure 2A is abstracted for the control method as:
- three DC buses, i.e., the positive DC pole, negative DC pole, and neutral or metallic return (also referred to as the 'central bus');
- two AC buses (connected in parallel from the AC power side 208a), i.e., one for the positive AC pole and one for the negative AC pole, with two power transformers representative of fixed amount of losses; and
- two series connected converters, with one coupled between the positive and the central DC bus, and the second between the central DC bus and the negative bus.

Although the above abstraction describes a bipolar system, it will be appreciated that the abstraction can be readily modified to represent a monopolar system.

Figure 2B shows the same grid topology as that shown in figure 2A, flattened with labelling corresponding to the parameters useable in an optimization model. That is, as shown in figure 2B, according to the above-described abstraction, the following parameters may be defined for input into an optimization model:

| **Parameter** | **Unit** | **Description** |
|---|---|---|
| Pole status | True/False | Status 'False' means that the converter is not able to delivery power because it is an open circuit (i.e. the current magnitude through the converter must be zero). |
| *r_{g}* | Ω, > 0 | Grounding resistance of the central bus. |
| *p*_{*p*/*n,l*} | %, ≥ 0 | Fixed losses of the positive and negative pole with respect to the nominal power capability of the pole. |
| *u*_{*dp*/*dn,max*} | *kV, >* 0 | Maximum dual positive and negative voltage (positive: differences between positive and central, negative difference between central and negative). |
| *u*_{*dp*/*dn,min*} | *kV, > 0* | Minimum dual positive and negative voltage (positive: differences between positive and central, negative difference between central and negative). |
| *i*_{*p*/*n,max*} | *A,>* 0 | Rated (maximum absolute) current value over the positive and the negative converters/poles. |
| *p*_{*pcc,p*/*n,max*} | *MW, > 0* | Rated (maximum absolute) power value over the positive and negative converters/poles. |
| *u*_{*p*/*n,ref*} | *kV, >* 0 | Positive and negative pole voltage reference. |
| *p*_{*p*/*n,ref*} | MW, $⋚ 0$ | Positive and negative pole power (from the AC side) reference. |
| *d* | $\frac{kV}{MW}$ or $\frac{MW}{kV}$,> 0 | Droop control (same for positive and negative poles). Power and voltage references and droop are used accordingly based on the control converter model (can, by assumption, be the same for the positive and negative pole). |
| *u*_{*p*/*m*/*n,meas*} | *kV,* > 0 | Positive, metallic return, and negative pole voltage measurements. |
| *p*_{*p*/*n,meas*} | *MW,* $⋚ 0$ | Positive and negative pole power (from the AC side) measurements. |

Additionally, each converter station may be provided with a unique station identification (station ID).

The following variables may be defined for the optimization model to vary in pursuit of an optimized control setpoints for the various converter stations in the DC power network:

| **Parameter** | **Unit** | **Description** |
|---|---|---|
| *u*_{*p*/*m*/*n*} | *kV* | Converter station positive, central (or metallic return) and negative bus voltage magnitude with respect to the ground. |
| *i*_{*p*/*m*/*n*} | *A* | Converter station positive, central (or metallic return) and negative current magnitude (positive goes into the DC grid). |
| *p*_{*p*/*n,pcc*} | *MW* | AC active power from the positive and negative pole converter (positive goes into the AC grid). |
| *p*_{*p*/*n*} | *MW* | DC power from the positive and negative pole converter (positive goes into the DC grid). |

According to a particularly advantageous aspect of the present disclosure, the lines in the DC power network also form part of the abstracted representation of the DC power network. Lines are considered as connected between converter station buses (e.g., positive/central/negative) without any limitation about power network topologies (e.g., radial, meshed, etc.).

Further according to the above-described abstraction, the following additional parameters may be defined for input into an optimization model, relating to the lines in the power network:

| **Parameter** | **Unit** | **Description** |
|---|---|---|
| Branch status | True/False | Status 'False' means that the branch is opened from both sides, and 'True' means that the branch is electrically connected from both sides. |
| *r_{g}* | Ω/km, > 0 | Per unit resistance of the cable or overhead line forming the branch. |
| *l* | km, > 0 | Branch length. |
| *iᵣₐₜₑ* | *A* | Branch ampacity. |

Additionally, each line or branch may be provided with a unique station identification (branch ID), and an indication of the stations and/or busses between which the branch is connected.

The following additional variables may be defined for the optimization model to vary in pursuit of an optimized control setpoints for the various converter stations in the DC power network:

| **Parameter** | **Unit** | **Description** |
|---|---|---|
| *i* | *A* | Current flowing inside the branch (positive |
| | | if from → to). |
| *pₗ* | *MW* | Power lost due to Joule effect inside the cable or overhead line forming the branch. |

In the following, to explain an example basis of the presently disclosed control method, a power flow formulation is derived, considering a generalized pole to neutral voltage MTDC grid. Unless otherwise specified or clear, all the quantities are described in *per* - *unit (pu).* The *pu* calculation can be obtained by defining base voltage *(U_{b})* and base power *(P_{b})* with the proper units (e.g., *kV* and *MW*). All the other base quantities (like current, impedance, admittance) are defined consecutively.

Considering a grid composed by *Nₛ* stations and *N_{b}* branches (vector are composed by the ordered variable/parameters from all the station from 1 to *Nₛ).* Using an admittance approach where G represents an admittance matrix, is it possible to define the bus injection current for the three busses (positive, metallic/central and negative) of each station: ${I}_{p} = {G}_{p} {U}_{p}$ ${I}_{m} = {G}_{m} {U}_{m}$ ${I}_{n} = {G}_{n} {U}_{n}$

Due to the Kirchhoff's current law, the sum of the poles current, at the station level, must be zero: ${I}_{p} + {I}_{n} + {I}_{m} = 0 \to {G}_{p} {U}_{p} + {G}_{n} {U}_{n} + {G}_{m} {U}_{m} = 0$

Defining the sum of the currents equal to zero, gives the possibility to remove one voltage (dependent variable) over the three defined for the station. In particular, the positive pole to neutral voltage can be defined as: ${U}_{dp} = {U}_{p} - {U}_{m}$ and the dual negative can be defined as: ${U}_{dn} = {U}_{m} - {U}_{n}$

Merging the foregoing equations, the following is obtained: ${G}_{p} \left({U}_{dp}+{U}_{m}\right) + {G}_{n} \left({U}_{m}-{U}_{dn}\right) + {G}_{m} {U}_{m} = 0$

With some rearrangement, the express central voltages as function of the pole to neutral voltage can be expressed as: ${G}_{p} {U}_{dp} - {G}_{n} {U}_{dn} + {{\left({G}_{p}+{G}_{n}+{G}_{m}\right)}_{︸}}_{{G}_{t}} {U}_{m} = 0$ And then: ${U}_{m} = {{G}_{t}}^{- 1} \left({G}_{n}{U}_{dn}-{G}_{p}{U}_{dp}\right)$

The *Gₜ* admittance matrix should be invertible, meaning that it should have a full rank. In this particular application example, this means that one of the admittance matrices should be, at least, grounded in one point (typically the central bus may be grounded).

It is appreciated as a part of the present disclosure that, if all the buses a floating (not grounded) a very high (e.g., a few MΩ) grounding resistance can be added fictitiously in one point to avoid numeral instability and without practical consequences on the results. Hence, a more robust calculation can be provided.

For converters, pole to neutral voltages, currents and power can be defined by stacking: ${U}_{d} = \left[\begin{matrix}{U}_{dp} \\ {U}_{dn}\end{matrix}\right]$ ${I}_{d} = \left[\begin{matrix}{I}_{p} \\ {I}_{n}\end{matrix}\right]$ ${P}_{d} = \left[\begin{matrix}{P}_{p} \\ {P}_{n}\end{matrix}\right]$ ${P}_{d , pcc} = \left[\begin{matrix}{P}_{p , pcc} \\ {P}_{n , pcc}\end{matrix}\right]$

The relationship between them can be obtained using the above equations as: ${I}_{d} = {G}_{d} {U}_{d} ,$ where *G_{d}* is composed by: ${G}_{d} = \left[\begin{matrix}{G}_{p} - {G}_{p} {{G}_{t}}^{- 1} {G}_{p} & {G}_{p} {{G}_{t}}^{- 1} {G}_{n} \\ - {G}_{n} {{G}_{t}}^{- 1} {G}_{p} & {G}_{n} {{G}_{t}}^{- 1} {G}_{n} - {G}_{n}\end{matrix}\right] ,$ and where *G_{d}* is a *2Nₛx2Nₛ* matrix.

It is possible to calculate the pole bus voltages (positive, central/metallic and negative) starting from the pole to neutral voltages in the following way: ${U}_{p} = \left[I-{{G}_{t}}^{- 1}{G}_{p} {{G}_{t}}^{- 1}{G}_{n}\right] \left[\begin{matrix}{U}_{dp} \\ {U}_{dn}\end{matrix}\right] = B {U}_{d}$ ${U}_{m} = \left[-{{G}_{t}}^{- 1}{G}_{p} {{G}_{t}}^{- 1}{G}_{n}\right] \left[\begin{matrix}{U}_{dp} \\ {U}_{dn}\end{matrix}\right] = C {U}_{d}$ ${U}_{n} = \left[-{{G}_{t}}^{- 1}{G}_{p} {{G}_{t}}^{- 1}{G}_{n}-I\right] \left[\begin{matrix}{U}_{dp} \\ {U}_{dn}\end{matrix}\right] = D {U}_{d}$

And, in a similar way the pole bus current injection can be calculated in the following way: ${I}_{p} = {G}_{p} {BU}_{d} = {EU}_{d}$ ${I}_{m} = {G}_{m} {CU}_{d} = {FU}_{d}$ ${I}_{n} = {G}_{n} {DU}_{d} = {GU}_{d}$

Current flow over the branches can be obtained by defining a generic matrix Π, of *N_{b}xNₛ* dimension having this scheme: $Π = \left[\begin{matrix}{y}_{1 , 1} & 0 & ⋯ & - {y}_{1 , j} & 0 \\ ⋮ & {y}_{2 , 2} & ⋱ & - {y}_{2 , j} & ⋮ \\ {y}_{{N}_{b} , 1} & 0 & ⋯ & 0 & - {y}_{{N}_{b} , {N}_{s}}\end{matrix}\right] ,$
where the general non-zero element ${y}_{b , \frac{i}{j}}$ is the admittance of the branch *b - th* connecting the indexed station *i - th* or *j* - *th.* Then the current branch flow will be: ${I}_{b , p} = {Π}_{p} {BU}_{d} = {HU}_{d}$ ${I}_{b , m} = {Π}_{m} {CU}_{d} = {LU}_{d}$ ${I}_{b , n} = {Π}_{n} {DU}_{d} = {MU}_{d}$

The DC power balance, i.e. the injected between the positive-central poles and the central-negative poles is equal to: ${P}_{d} = {I}^{\pm } diag \left({U}_{d}\right) {G}_{d} {U}_{d} ,$
where *I*^{±} is the identity matrix, with the second half equal -1 to have, for the negative pole, the same flow sign conversion of the positive pole. Finally, the grid power balance can be defined as: ${P}_{d , pcc} + {P}_{d} + {P}_{dl} = 0 ,$ where *P_{dl}* is the columns vector about station losses (entries are set to zero if the pole converter is not available).

Based on the above description, an optimization problem can be derived to minimize between the updated references and the previous references and/or the measured values, with at least the converter rating and the line ratings as constraints.

The canonical formulation of an optimization problem can be defined as: ${min}_{x} f \left(x\right)$ $s . t . h \left(x\right) = 0$ $g \left(x\right) \geq 0 ,$
where f: ${ℝ}^{{n}_{x}} \to ℝ$ is a generic objective function to be minimized for the *nₓ*-dimensional decision variable *x; h(x)* is the generic set of equality constraints mapping from ${ℝ}^{{n}_{x}} \to {ℝ}^{{n}_{e}}$ with *nₑ* number of equality constraints; and *g(x)* is a generic set of inequality constraints mapping from ${ℝ}^{{n}_{x}} \to {ℝ}^{{n}_{i}}$ with *nᵢ* number of equality constraints. In this formulation, all the functions may be assumed twice differentiable, and all the variables may be considered continuous in their domain.

An example optimization problem can be configured for the present implementation of updating references or control setpoints for converters in a MTDC power network, as follows.

Considering an *x* vector, composed by *nₓ* scalar variables, and applying the power flow formulation for the pole to neutral voltage DC grids, the state and control variables are the dual positive and negative voltages with the positive and negative pole DC powers. Stacking them in a single vector, we obtain the *x* vector as following: $x = \left[\begin{matrix}{U}_{d} \\ {P}_{d , pcc}\end{matrix}\right] ,$ where *U_{d}* and *P_{d,pcc}* are defined above. Hence, *x* is composed of two vectors of size *2Nₛ,* where *Nₛ* is the number of converter/DC stations, i.e., *nₓ* = 4 ** Nₛ.* The power balance for DC stations (positive and negative poles) form the equality constraints of the optimization problem, i.e., *nₑ = 2Nₛ.* The set of inequality constraints defines all operative ranges of pole converters and DC branches. Using the canonical presentation of inequality constraints (as shown above), a generic double bounded (box) constraint can be transformed into two inequality constraints with only one right hand side as follows: $\begin{matrix}{B}_{L} \leq g \left(x\right) \leq {B}_{U} \\ ↓ \\ g \left(x\right) - {B}_{L} \geq 0 \\ {B}_{U} - g \left(x\right) \geq 0\end{matrix}$

For this formulation, all the inequality constraints are linear (the implication of which is expanded on below). The set of inequality constraints defines the limits for:
- pole to neutral voltages magnitude (upper and lower limits) 4 × *Nₛ,*
- pole power (symmetrical limits equal to the rated power) 4 × *Nₛ,*
- current magnitude for positive and negative pole (symmetrical limits) 4 × *Nₛ,* and
- branch current (symmetrical limits current limits) 3 × 2 × *N_{b}* (three due to the present of positive, negative and central return).

In case of branch unavailability, the current constraint for said branch can be neglected.

Thus, it is seen that, in this example, the number of inequality constraints are equal to: ${n}_{i} = 12 {N}_{s} + 6 {N}_{b}$

For example, in the case of 5 stations and 4 connections between them, *x* would have 20 components, and the optimization problem would have 10 and 84 equality and inequality constraints, respectively.

An aim of the optimization problem is to minimize the distance between the updated references/control setpoints for the converter voltages and powers with respect to their previous references (and/or measurements) while maintaining a feasible solution, i.e., a power flow solution without any violations (for balance and unbalanced cases, where a balanced case can be defined as, for example, when the positive and negative pole current are the same).

It will be appreciated that various assumptions can be made depending on the topology of the MTDC grid, known common features of the converter stations, etc. For example, assumptions may be that positive and negative poles follows the same control logic and, in case of a pole outage, its contribution in the objective function is neglected.

According to a preferred example, three primary types of control logic can be identified:
(a) Voltage following control mode. In this case, only the voltage deviation with respect to its reference is penalized (for both poles)
(b) Power following control mode. In this case, only the power deviation with respect to its reference is penalized (for both poles)
(c) (P-U) Droop control mode. In this case, the power and voltage have a linear dependency; droop is defined as $\frac{kV}{MW}$ (for both poles).

The choice of which control logic is followed can be achieved by adjusting weightings between voltage deviation and power deviation penalties, a particular example of which is discussed below.

According to a further refinement, three further implementations of the control logic can be identified:
(d) (U-P) Droop control mode. In this case, the power and voltage have a linear dependency; droop is defined as $\frac{MW}{kV}$ (for both poles).
(e) Free control model. In this case, no penalties are applied due to deviation from their reference values (for both poles).
(f) Voltage/Power following control mode. In this case, voltage and power deviation with respect to their references are equally penalized (for both poles).

In an example, a L2 (Euclidean norm) minimization can be implemented to promote lower variance but higher bias than the L1 (which promotes sparsity of the solution).

The above control logic/methods can be generalized with the following equation: $ξ = {ψξ}_{ref} + \left(1-ψ\right) {ξ}_{meas}$ ${ξ}_{ref} = γ {\left(α\left(p-{p}_{ref}\right)+β\left(u-{u}_{ref}\right)\right)}^{2}$ ${ξ}_{meas} = γ {\left(α\left(p-{p}_{meas}\right)+β\left(u-{u}_{meas}\right)\right)}^{2} ,$ where *α, β, γ,* and *ψ* are generic parameters while *p* and *u* is a tuple of power and voltage variables.

After some mathematical arrangements, the following matrix representation (for the reference part) can be obtained: $\begin{matrix}{ξ}_{ref} = \left[p u\right] {{\left[\begin{matrix}{γα}^{2} & γαβ \\ γαβ & {γβ}^{2}\end{matrix}\right]}_{︸}}_{{O}_{q}} \left[\begin{matrix}p \\ u\end{matrix}\right] + {{\left[-2γα\left({αp}_{ref}+{βU}_{ref}\right) -2γβ\left({αp}_{ref}+{βU}_{ref}\right)\right]}_{︸}}_{{O}_{l}} \left[\begin{matrix}p \\ u\end{matrix}\right] + \\ + {{γ \left({α}^{2}{p}_{ref}^{2}+{β}^{2}{u}_{ref}^{2}+2{αβp}_{ref}{u}_{ref}\right)}_{︸}}_{{o}_{c}}\end{matrix}$

The same can be done for the measurement related part. This formulation represents a generic quadratic objective function, with the following shape: $f \left(x\right) = {ψξ}_{ref} + \left(1-ψ\right) {ξ}_{meas} = {x}^{T} {O}_{q} x + {O}_{l}^{T} x + {o}_{c} ,$ where *O_{q}* is the matrix representing the quadratic terms, *Oₗ* is columns vector representing the linear terms and *c_{c}* is the constant factor.

While *γ* is defined as a generic scaling factor, parameters *α* and *β* assume different meaning in case of different control modes:

| **Control mode** | **Parameter *α*** | **Parameter *β*** |
|---|---|---|
| Voltage following control mode | 0 | 1 |
| Power following control mode | 1 | 0 |
| (P-U) Droop control mode | $- d \left[\frac{kV}{MW}\right] \frac{{p}_{base}}{{u}_{base}}$ | 1 |
| (U-P) Droop control mode | 1 | $- d \left[\frac{MW}{kV}\right] \frac{{u}_{base}}{{p}_{base}}$ |
| Free control model | 0 | 0 |
| Power Voltage following control mode | 1 | 1 |

In the case of droop control, the parameter may have a negative value due to the opposite sign assigned to the power at the PCC level (positive if there is power flow from the DC to AC grids).

In this example formulation, the quadratic terms matrix *O_{q}* has only nonzero entries on the places related to same pole and same stations. Using the matrix notation, the gradient (first order derivative, ∇*ₓf*(*x*)) and the Hessian (second order derivative, ∇*ₓₓf*(*x*)) of the objective function can be defined by the following equations: ${\left.{∇}_{x}f\left(x\right)=\frac{\partial f \left(x\right)}{\partial x}\right|}_{{N}_{x} x 1} = 2 {O}_{q} x + {O}_{l}$ ${\left.{∇}_{xx}f\left(x\right)=\frac{{\partial }^{2} f \left(x\right)}{\partial x \partial x}\right|}_{{N}_{x} {xN}_{x}} = 2 {O}_{q}$

The Gradient and Hessian can be used by the optimization algorithm, as discussed as part of a below example. A further consideration, in respect of computational efficiency, is that the Hessian matrix is constant (not depending on the solution) and thus can advantageously be generated upfront.

As already mentioned, the set of equality constraints can be used to generate a power flow solution, where the power balances are kept in the positive and negative poles over all the DC stations. Following the above equations, the equality constraint related to power flow is shown in the flowing equation (as a nonlinear quadratic equality constraints): $h \left(x\right) = 0 \to {{diag \left(\left[{I}^{\pm } 0\right]x\right) {{\left[{G}_{d} 0\right] x}_{︸}}_{{I}_{d}}}_{︸}}_{{P}_{d}} + {{\left[0 I\right] x}_{︸}}_{{P}_{d , pcc}} + {{{P}_{dl}}_{︸}}_{losses} = 0 ,$ where 0 and *I* are *2Nₛ* x *2Nₛ* zero and identity matrices.

Following the same description approach of the objective function, the gradient and the Hessian can be described as follows: ${\left.{∇}_{x}h\left(x\right)=\frac{\partial h \left(x\right)}{\partial x}\right|}_{{N}_{e} {xN}_{x}} = diag \left(\left[{I}^{\pm } 0\right]x\right) {G}_{d} + diag \left(\left[{G}_{d} 0\right]x\right) + \left[0 I\right] x$ ${∇}_{xx} h \left(x\right) = {\left.\frac{{\partial }^{2} h \left(x\right)}{\partial x \partial x}\right|}_{{N}_{x} {xN}_{x}} = \left[\begin{matrix}diag \left({G}_{d}\right) + {G}_{d} & 0 \\ 0 & 0\end{matrix}\right]$ ${∇}_{xx} h \left(x\right) = {\left.\frac{{\partial }^{2} h \left(x\right)}{\partial {x}_{th} \partial x}\right|}_{{N}_{x} {xN}_{x}} = \left[\begin{matrix}{E}_{th} {G}_{d} + {G}_{d} {E}_{th} & 0 \\ 0 & 0\end{matrix}\right]$

For the equality constraints, in this example, the Hessian of will be a constant parameter with non-zero elements only in the voltage related part. The lower equation above shows the Hessian related to a specific variable index, where *Eₜₕ* is a *Nₑ* × *Nₑ* with a nonzero in the *-th* diagonal element (if the index points to the voltage, otherwise zero).

As described above, inequality constraints can be used to keep electrical quantities inside their bounds. Using the presently disclosed modelling approach, all the inequality constraints have a linear shape, and can be represented as following (by stacking all relative pieces): $\left[\begin{matrix}I & 0 \\ - I & 0 \\ 0 & I \\ 0 & - I \\ E & 0 \\ - E & 0 \\ G & 0 \\ - G & 0 \\ H & 0 \\ - H & 0 \\ L & 0 \\ - L & 0 \\ M & 0 \\ - M & 0\end{matrix}\right] x + \left[\begin{matrix}- {u}_{dp / dn , min} \\ {u}_{dp / dn , max} \\ {p}_{pcc , p / n , max} \\ {p}_{pcc , p / n , max} \\ {i}_{p / n , max} \\ {i}_{p / n , max} \\ {i}_{p / n , max} \\ {i}_{p / n , max} \\ {i}_{p , rate} \\ {i}_{p , rate} \\ {i}_{m , rate} \\ {i}_{m , rate} \\ {i}_{n , rate} \\ {i}_{n , rate}\end{matrix}\right] \geq 0 \to Ax - b \geq 0$

Using this formulation, the gradient will be equal to the matrix A, while the Hessian is zero.

To summarize, in this example, the inequality constraints represent the box constraints related to converter pole to neutral voltages, current and power while for the branches the maximum current value. In case of converter(s) outages, the relative power(s) variable bounds are set to zero, in case of branch(es) outage the set of relative constraints is removed.

With the optimization problem properly defined, a numerical solution to the optimization problem can provide the updated references for a converter. According to a preferred example of the present disclosure, the interior point method is used.

The interior point method for nonlinear problems is an approach to solve nonlinear and nonconvex constrained problems such as that described above.

Generally, the interior point method (IPM) solves problems of the form: ${min}_{x , s} f \left(x\right) , s . t . :$ $h \left(x\right) = 0$ $g \left(x\right) - s = 0$ $s \geq 0$

The inequality constraint *g*(*x*) ≥ 0 above has been reformulated as an equality constraint by introducing the slack variable s. Using a mild assumption, a solution to the above satisfies the Karush-Kuhn-Tucker (KKT) conditions.

With an alternative formulation of the above, these can be rewritten as: $∇ f \left(x\right) - {A}_{h}^{T} \left(x\right) y - {A}_{g}^{T} \left(x\right) z = 0$ $\begin{matrix}Sz - μe = 0 \\ h \left(x\right) = 0 \\ g \left(x\right) - s = 0\end{matrix}$ $s \geq 0 , z \geq 0 .$

Here, *y* and z are the Lagrange multipliers of the equality and inequality constraints, and *Aₕ* and *A_{g}* are the Jacobian matrices of equality and inequality constraints. Further, S and Z are the diagonal matrices whose diagonal entries are given by the variables s and z, respectively.

The first row of (37) corresponds to the gradient of the Lagrangian function: $L \left(x, y, z\right) = f \left(x\right) - {y}^{T} h \left(x\right) - {z}^{T} \left(g\left(x\right)-s\right) .$

Viewed from one perspective, a goal of the IPM as applied in the present context comprises finding a KKT point for a sequence of positive parameters {*µₖ*} that converges to zero while maintaining *s, z* > 0.

This approach can thus converge to a minimum for the optimization problem.

For this, a line-search IPM method in one form can be characterized by finding a search direction *p =* (*pₓ, pₛ, p_{y}, p_{z}*) in each iteration that solves the system as defined above with the Newton step: $\left[\begin{matrix}{∇}_{xx}^{2} L & 0 & - {A}_{h}^{T} & - {A}_{g}^{T} \\ 0 & Z & 0 & S \\ {A}_{h} & 0 & 0 & 0 \\ {A}_{g} & - I & 0 & 0\end{matrix}\right] \left[\begin{matrix}{p}_{x} \\ {p}_{s} \\ {p}_{y} \\ {p}_{z}\end{matrix}\right] = - \left[\begin{matrix}∇ f \left(x\right) - {A}_{h}^{T} \left(x\right) y - {A}_{g}^{T} \left(x\right) z \\ Sz - μe \\ h \left(x\right) \\ g \left(x\right) - s\end{matrix}\right] .$

The computational complexity of IPM methods may thus depend on the efficiency of the linear solver for the above-defined system and the Newton step that is applied in every iteration.

The system defined above can be simplified to: $\left[\begin{matrix}{∇}_{xx}^{2} L + {A}_{g}^{T} {ZS}^{- 1} {A}_{g} & {A}_{h}^{T} \\ {A}_{h} & 0\end{matrix}\right] \left[\begin{matrix}{Δ}_{x} \\ {Δ}_{y}\end{matrix}\right] = - \left[\begin{matrix}∇ f \left(x\right) - {A}_{h}^{T} \left(x\right) y - {A}_{g}^{T} \left(x\right) z - {μA}_{g}^{T} {S}^{- 1} + {A}_{g}^{T} {ZS}^{- 1} g \left(x\right) \\ h \left(x\right)\end{matrix}\right] ,$ where the search direction is obtained by: ${p}_{x} = {Δ}_{x}$ ${p}_{y} = - {Δ}_{y}$ ${p}_{s} = {A}_{I} {Δ}_{x} + {c}_{I} \left(x\right) - s$ ${p}_{z} = {μS}^{- 1} e - z - {ZS}^{- 1} {p}_{s}$

For the ease of readability, the matrix on the left-hand side is denoted by *W*, the vector (Δ*ₓ*, Δ*_{y}*) by Δ and the right-hand side of the above simplified matrix representation by r. The matrix W can be ill-conditioned, for which reason the slightly perturbed matrix W + *εI* can be used to advantageously mitigate potential numerical instabilities (in this example, it is set as *ε* = 10⁻⁸).

Hence, the following system is solved: $\left(W+ϵI\right) Δ = r$

The efficiency of generating new search directions may be dependent on the strategy to solve the linear symmetric system. In the presently considered application, the size of the problems considered are of such order as to allow the advantageous use of a direct solver for the above, by PLU decomposition of the matrix W *+ εI.*

After the step p *=* (*pₓ, p_{y}, pₛ, p_{z}*) has been determined using the above, the new iterate (*x⁺,s⁺,y⁺,z⁺*) can be computed as ${x}^{+} = x + {α}_{s}^{max} {p}_{x} ,$ ${s}^{+} = s + {α}_{s}^{max} {p}_{s} ,$ ${y}^{+} = y + {α}_{z}^{max} {p}_{y} ,$ ${z}^{+} = z + {α}_{z}^{max} {p}_{z} ,$ where: ${α}_{s}^{max} = max \left\{α∈\left(0, 1\right]:s+{αp}_{s}\geq \left(1-τ\right)s\right\} ,$ ${α}_{z}^{max} = max \left\{α∈\left(0, 1\right]:z+{αp}_{z}\geq \left(1-τ\right)z\right\} ,$ with *τ* ∈ (0,1).

In the present example, *τ* = 0.995.

It will be appreciated that other approaches can be employed to update the step length (merit functions, filters, etc.).

Following the above example, once the new step is computed, the barrier parameter µ is updated. The sequence {*µₖ*} should converge to zero such that in the limit, the solution of the optimization problem is recovered.

It will be appreciated that there may be a trade-off between slow convergence (decreasing the parameter too slowly) and the risk of components of slacks s and z being stuck in zero values (decreasing the parameter too quickly).

Hence, in preferred examples, an adaptive strategy is implemented, given by: ${μ}^{k + 1} = {σ}_{k} \frac{{s}_{k + 1}^{T} {z}_{k + 1}}{{n}_{i}} .$

Further, in preferred examples, the scaling parameter is set to a small, fixed value. For example, the scaling parameter may be set to *σₖ* = 0.1 for all iterations *k* = 1,2, .... The start barrier parameter may be set to *µ*₀ = 1.

The algorithm can be stopped when the number of maximum iterations (e.g., set to 100) or the KKT conditions are numerically fulfilled. For this, the error of optimality, primal and dual feasibility can be defined as follows: ${E}_{1} = {\left‖∇f\left(x\right)-{A}_{h}^{T}\left(x\right)y-{A}_{g}^{T}\left(x\right)z\right‖}_{∞} ,$ ${E}_{2} = {\left‖Sz-μe\right‖}_{∞ ,}$ ${E}_{3} = {\left‖h\left(x\right)\right‖}_{∞ ,}$ ${E}_{4} = {\left‖g\left(x\right)-s\right‖}_{∞} .$

If all the errors *E*1 - E4 are below a pre-specified threshold *ε_{KKT},* the algorithm can be considered as being converged to a local optimum. That is, the algorithm may be stopped when: $E : = max \left\{{E}_{1}, {E}_{2}, {E}_{3}, {E}_{4}\right\} \leq {ϵ}_{KKT} .$

In preferred implementations, the convergence criterion is set as *ε_{KKT}* = 10⁻⁸.

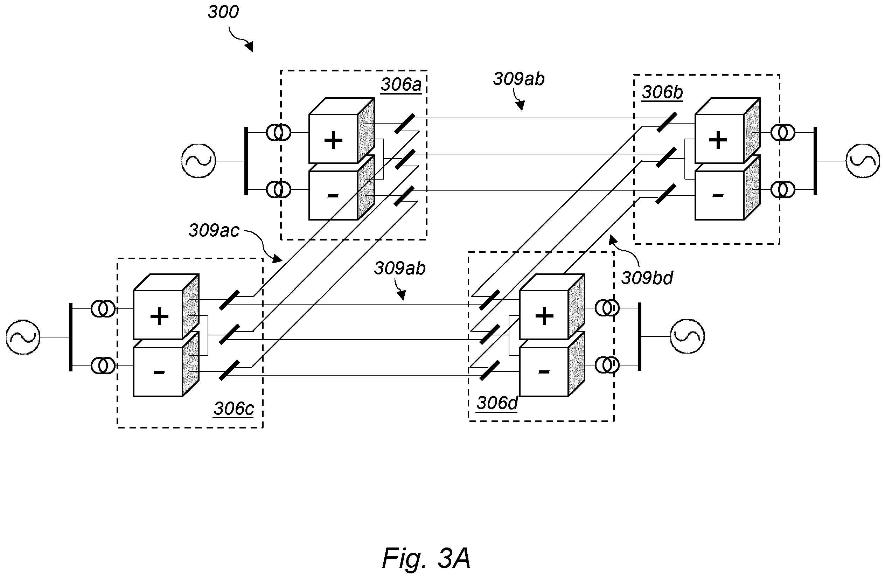

Figures 3A and 3B schematically show another example MTDC power network 300, formed as a loop of four converter stations 306a, 306b, 306c, 306d, sometimes referred to collectively as 'converter stations 306' in the following. The converter stations 306 in this illustrated example are substantially the same, at least in respect of their function and connections, as those illustrated in figure 2. However, it can be seen that, to form the loop in this example, each DC bus comprises two lines connected thereto.

Figure 3A shows the power network 300 in more detail, at least in respect of the connectivity between converter stations 306. The positive pole DC buses, neutral/central buses, and negative pole DC buses of converter station 306a are connected to respective buses of converter station 306b via respective lines 309ab. Similarly, converter station 306a is connected to converter station 306c via lines 309ac, converter station 306b is connected to converter station 306d via lines 309bd, and converter station 306c is connected to converter station 306d via lines 309cd.

In figure 3B, which shows a simplified view of the system 300 shown in figure 3A, an example application of the control method disclosed herein is illustrated. That is, control setpoints for voltage and power are shown, where the numbers with arrows entering and exiting the positive and negative poles of the converter stations represent power setpoints for said poles. The numbers over the lines/branches represent, from top to bottom, the current flow through the positive, neutral (DMR), and negative pole lines, respectively.

In the left subplot of figure 3B, a pre-contingency state is seen, and, in the right subplot of figure 3B, a post-contingency state is seen, where the positive pole of converter station 306b in the network 300 has failed.

Of particular note, it can be seen that, as a result of the implementation of the presently disclosed control method, power flow through the power network 300 is substantially preserved through minimal deviation from the original pole power references.

It can also be seen that the presence and individualized obtaining of information for each of the lines 309 enables an individual current/power flow to be determined for each line/branch, where, for example, the DMR can be seen as carrying current after the contingency but not before.

Figure 3B thus illustrates an example implementation of the presently disclosed method and highlights the advantages of minimizing deviations and a comprehensive obtaining of information not only for converter stations, but also for the branches between them.

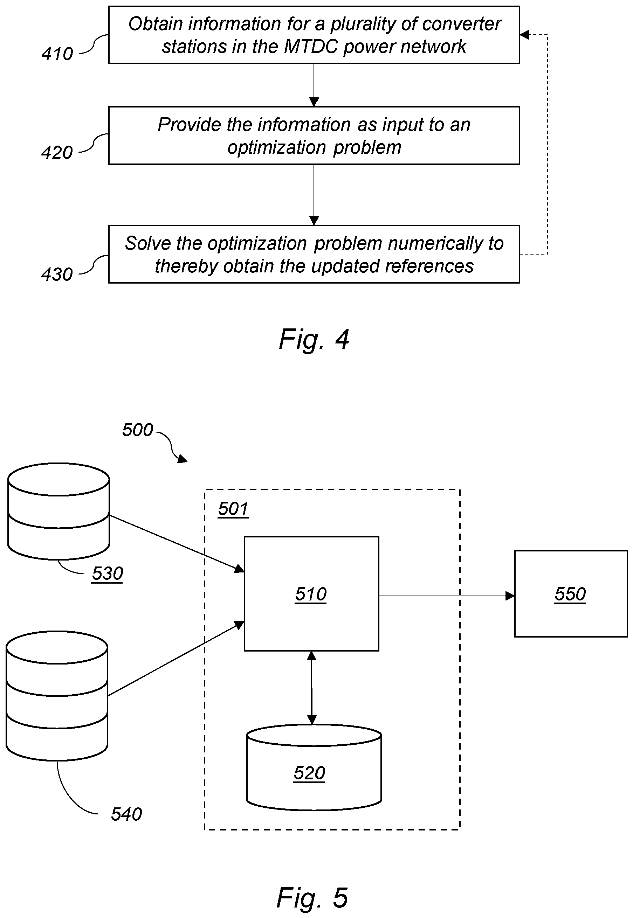

Figure 4 generally illustrates a computer-implemented method 400 for determining updated references for at least one converter in an MTDC power network, according to aspects of the present disclosure.

The method 400 comprises obtaining 410 information for a plurality of converter stations in the MTDC power network.

The information comprises, for each converter station: a previous reference for the power of a converter in the converter station, a measured value for the power of the converter, a previous reference for the voltage of the converter, a measured value for the voltage of the converter, a converter rating for the converter, and a line rating for lines connected to the converter station.

The method 400 further comprises providing 420 the information as input to an optimization problem.

The optimization problem is configured to minimize a difference between the updated references and the previous references and/or the measured values, with at least the converter rating and the line ratings as constraints.

The method 400 then comprises solving 430 the optimization problem numerically to thereby obtain the updated references.

As indicated by the dotted line, the method 400 may be repeated as part of an ongoing control loop. That is, the method 400 may be performed repeatedly at regular or dynamically adjusted intervals, or in response to a (push or pull) request such as in response to a detected contingency event on the power network.

It will be seen that the method illustrated in figure 4 is a more general form of the example discussed above, but the advantages provided are substantially the same. That is, for example, in case of contingency events for MTDC power networks, the pre-contingency power and voltage converter references may not be valid anymore, and/or they could lead to working points that are not applicable due to a violation in voltage or current capabilities.

The method 400 thus finds an optimal set of working condition to define as a minimum deviation from the former references. Further, the method 400 can also be used to define power and voltage profiles for grid converters with or without contingencies. This contributes to improved grid stability and reliability in case of a contingency event, as well as defining DC voltage setpoints based on the active power setpoints from the AC side of the MTDC network, for example.

According to some refinements, the method 400 can be extended to include more sophisticated objective functions, like (multi objective), as well as incorporating stability constraints and more sophisticated converter models.

Figure 5 illustrates an example system 500 for performing the method of figure 4. The system 500 comprises data processing system 510 comprising means for carrying out the method 400 illustrated in figure 4. The data processing system 510 may comprise a processor capable of executing computer-readable instructions 520.

In the example shown in figure 5, the computer-readable instructions 520 are stored in the form of a computer program on the same device 501 in which the data processing system 510 is installed. That is, stored on the device 501, e.g., in a computer-readable storage medium, is a computer program comprising instructions 520 which, when the program is executed by the processing system 510, cause the device 501 to carry out the method illustrated in figure 4. In some examples, the device 501 and the data processing system 510 are one and the same.

In this example representation, the device 501 is provided with converter information 530 such as previous (i.e., present but soon-to-be previous) references according to which one or more converters may currently be controlled, control modes enacted and/or executable by the converter(s), or the like.

The device 501 is also provided with power grid data 540 such as power flow measurements, connectivity statuses for converter stations and/or lines, line ratings, or the like.

The device 501 may then, using some or all of these inputs, execute the method 400 as illustrated in figure 4 (or a refinement thereof), and thereby output an updated reference 550 for one or more converters in the power network.

The device 501 (which may also be referred to as an 'optimal power flow solver 501') may be deployed in a master grid controller, and may reside as hardware and/or software in one of the converter stations or elsewhere on the power network, or remote therefrom (e.g., in a cloud-based setting).

If multiple physical locations of the master grid controllers which include these optimal power flow solvers 501 are envisaged for redundancy purposes, a mechanism to synchronize the outputs of the multiple load flow solvers 501 during switchover of master and slave stations could advantageously be included.

Specific aspects and refinements of the present disclosure may be better understood through consideration of the following clauses:
1. A computer-implemented method for determining updated references for at least one converter in a multiterminal DC, MTDC, power network, the method comprising:
   obtaining information for a plurality of converter stations in the MTDC power network, wherein the information comprises, for each converter station:
      a previous reference for the power of a converter in the converter station,
      a measured value for the power of the converter,
      a previous reference for the voltage of the converter,
      a measured value for the voltage of the converter,
      a converter rating for the converter, and
      a line rating for lines connected to the converter station;
   providing the information as input to an optimization problem, wherein the optimization problem is configured to minimize a difference between the updated references and the previous references and/or the measured values, with at least the converter rating and the line ratings as constraints; and
   solving the optimization problem numerically to thereby obtain the updated references.
2. The method according to clause 1, wherein the optimization problem is configured to minimize a difference between the updated reference and the previous reference and/or the measured value for the power of the converter, according to a first weighting, and wherein the optimization problem is configured to minimize a difference between the updated reference and the previous reference and/or the measured value for the voltage of the converter, according to a second weighting, said second weighting being adjustable relative to the first weighting.
3. The method according to clause 2, wherein the optimization problem is configurable to adopt any one of:
   a voltage following control mode, wherein deviation from a voltage reference is penalized,
   a power following control mode, wherein deviation from a power reference is penalized, and
   a droop control mode, wherein deviation from a linear relationship between voltage and power references is penalized;
   via adjustment of the first weighting relative to the second weighting.
4. The method according to any preceding clause, wherein the optimization problem is configured to minimize a difference between the updated references and the previous references according to a third weighting, and configured to minimize a difference between the updated references and the measured values according to a fourth weighting, said fourth weighting being adjustable relative to the third weighting.
5. The method according to any preceding clause, wherein the information comprises, for each converter station:
   a measured value for the converter pole voltage and/or the converter pole power;
   a voltage rating, a current rating, and/or a power rating for the converter; and
   a current rating for lines connected to the converter station.
6. The method according to any preceding clause, wherein at least the converter station comprising the at least one converter is a bipolar converter station having a positive pole and a negative pole, each of the positive pole and negative pole having at least one line connected thereto, and wherein the control setpoint is used for both the positive and negative poles.
7. The method according to clause 6, wherein the converter station further comprises a neutral having at least one dedicated metallic return, DMR, line connected thereto.
8. The method according to clause 7, wherein the information further comprises a grounding resistance for the neutral.
9. The method according to any preceding clause, wherein the information comprises, for each line connected to the converter station, an identifier for the line, information regarding the converter station(s) the line is connected to, a resistance of the line, a length of the line, and/or an ampacity of the line.
10. The method according to any preceding clause, wherein the information further comprises a determined power loss for the converter.
11. The method according to clause 10, when depending from clause 6, wherein the power loss for the positive pole and the negative pole is determined as a fixed proportion of the respective nominal power capability.
12. The method according to any preceding clause, wherein the information obtained is substantially real-time information.
13. The method according to any preceding clause, wherein solving the optimization problem numerically comprises using an interior point method.
14. The method according to any preceding clause, wherein obtaining information for the plurality of converter stations in the MTDC power network comprises obtaining information for each converter station in the MTDC network, and wherein a respective control setpoint is determined for said each converter station in the MTDC network.
15. A data processing system comprising means for carrying out the method of any preceding clause.
16. A computer program comprising instructions which, when the program is executed by a computer, cause the computer to carry out the method of any of clauses 1 to 14.
17. A computer-readable medium comprising instructions which, when executed by a computer, cause the computer to carry out the method of any of clauses 1 to 14.

While the present disclosure is susceptible to various modifications and alternative forms, specific embodiments are shown and described above by way of example in relation to the drawings, with a view to clearly explain the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A computer-implemented method for determining updated references for at least one converter in a multiterminal DC, MTDC, power network, the method comprising:
obtaining information for a plurality of converter stations in the MTDC power network, wherein the information comprises, for each converter station:
a previous reference for the power of a converter in the converter station,
a measured value for the power of the converter,
a previous reference for the voltage of the converter,
a measured value for the voltage of the converter,
a converter rating for the converter, and
a line rating for lines connected to the converter station;
providing the information as input to an optimization problem, wherein the optimization problem is configured to minimize a difference between the updated references and the previous references and/or the measured values, with at least the converter rating and the line ratings as constraints; and
solving the optimization problem numerically to thereby obtain the updated references.

2. The method according to claim 1, wherein the optimization problem is configured to minimize a difference between the updated reference and the previous reference and/or the measured value for the power of the converter, according to a first weighting, and wherein the optimization problem is configured to minimize a difference between the updated reference and the previous reference and/or the measured value for the voltage of the converter, according to a second weighting, said second weighting being adjustable relative to the first weighting.

3. The method according to claim 2, wherein the optimization problem is configurable to adopt any one of:
a voltage following control mode, wherein deviation from a voltage reference is penalized,
a power following control mode, wherein deviation from a power reference is penalized, and
a droop control mode, wherein deviation from a linear relationship between voltage and power references is penalized;
via adjustment of the first weighting relative to the second weighting.

4. The method according to any preceding claim, wherein the optimization problem is configured to minimize a difference between the updated references and the previous references according to a third weighting, and configured to minimize a difference between the updated references and the measured values according to a fourth weighting, said fourth weighting being adjustable relative to the third weighting.

5. The method according to any preceding claim, wherein the information comprises, for each converter station:
a measured value for the converter pole voltage and/or the converter pole power;
a voltage rating, a current rating, and/or a power rating for the converter; and
a current rating for lines connected to the converter station.

6. The method according to any preceding claim, wherein at least the converter station comprising the at least one converter is a bipolar converter station having a positive pole and a negative pole, each of the positive pole and negative pole having at least one line connected thereto, and wherein the control setpoint is used for both the positive and negative poles.

7. The method according to any preceding claim, wherein the information comprises, for each line connected to the converter station, an identifier for the line, information regarding the converter station(s) the line is connected to, a resistance of the line, a length of the line, and/or an ampacity of the line.

8. The method according to any preceding claim, wherein the information further comprises a determined power loss for the converter.

9. The method according to claim 8, when depending from claim 6, wherein the power loss for the positive pole and the negative pole is determined as a fixed proportion of the respective nominal power capability.

10. The method according to any preceding claim, wherein the information obtained is substantially real-time information.

11. The method according to any preceding claim, wherein solving the optimization problem numerically comprises using an interior point method.

12. The method according to any preceding claim, wherein obtaining information for the plurality of converter stations in the MTDC power network comprises obtaining information for each converter station in the MTDC network, and wherein a respective control setpoint is determined for said each converter station in the MTDC network.

13. A data processing system comprising means for carrying out the method of any preceding claim.

14. A computer program comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.
